# EUROPEAN PATENT APPLICATION

(11) **EP 2 741 104 A1**
(43) Date of publication of application: **11.06.2014**
(21) Application number: 12195614.8
(22) Date of filing: 05.12.2012
(51) Int. Cl.: G01S 13/88

(54) **A virtual fencing system for a mining environment, a central processing center and a mobile processing center for the virtual fencing system**

(71) Applicant: Siemens Aktiengesellschaft, 80333 München (DE)
(72) Inventor: Das, Saptarshi, 560102 Bangalore (IN); Murugaiah, Thirumalai Kumar, 560099 Bangalore (IN)

(57) **Abstract**

A virtual fencing system (1) includes a central processing center (2) and a mobile processing center (3) coupled to transfer data. The central processing center (2) a sensor (4) which captures real time information (5) from the mining environment, a data storage (6) which stores a geological information (7) related to the mining environment, a central processing unit (8) which receives the real time information (5) from the sensor (4) and the geological information (7) of the mining environment from the data storage (6), and processes the real time information (5) and the geological information (7), and generates a hazardous location information (9) regarding locations in the mining environment likely to be affected due to slope failures. The mobile processing center (3) includes a receiver (14) which receives a hazardous location information (9) from the central processing center (2), a mobile processing unit (15) which receives the hazardous location information (9) from the receiver (14) and compares the hazardous location information (9) with respect to a current location (12) of the mobile processing center (3) for regulating movement of the mobile processing center (3) within the mining environment. The hazardous location information (9) is defined by location in the mining environment likely to be affected due to slope failures. The current location (12) of the mobile processing center (3) refers to location of the mobile processing center (3) within the mining environment at a particular time instance.

## Description

A virtual fencing system for a mining environment, a central processing center and a mobile processing center for the virtual fencing system

The invention relates to handling surface failures in mining environment. More particularly, the invention relates to creating a virtual fence in a mining environment to deal with slope failures.

Slope failure is a phenomenon defining collapsing of a slope abruptly in a mining environment due to weakened self retain-ability of a surface. Slope failure is one of the major problems in open pit mines. A slope failure can lead to a major avalanche, causing loss of life, damaging instruments, destroying the ramps and disturbing the whole mining process.

Slope Stability Radars (SSR) is used to check any movement in the surface of the mining environment. Once the SSR detects movements in consecutive time point an alarm is generated. Techniques based on fusing imaging (video) data and SSR data is also used in practice.

One way to deal with slope failure is disclosed in US Patent application US 2009/0121888 A1, wherein a method and a system is disclosed for determining alarm conditions of a slope under inspection whereby one or more dimensionless threat estimate values are calculated for one or more time periods. The maximum dimensionless threat estimate value calculated is selected and compared with a threshold alarm value. If the maximum dimensionless threat estimate value exceeds the threshold alarm value alarm conditions are set to indicate that the slope under inspection is exhibiting unsafe movement. However, such alarm conditions only detects the part of the mine wall that might fail and is not sufficient to describe the zone that might be affected by the wall failure.

Currently available methods for detecting slope failures only detect the areas probable of slope failures in a mining wall. However, the total area that gets affected by the slope failure is much larger than the location of the slope failure.

The object of the invention is to identify location affected due to slope failures in a mining environment.

The object is fulfilled by a central processing center which can be coupled with a mobile processing center to send and receive data. The central processing center includes a sensor for capturing real time information from the mining environment, a data storage storing geological information related to the mining environment, and a central processing unit for receiving the real time information from the sensor and the geological information of the mining environment from the data storage, for processing the real time information and the geological information, and for generating a hazardous location information regarding locations in the mining environment likely to be affected due to slope failures. The central processing center adapted to provide the hazardous location information to the mobile processing center.

In one embodiment of the central processing center, the central processing generates the hazardous location information by determining a location coordinate on the global coordinate system. The global coordinate system defines the mining environment. This helps to define hazardous location information easily with respect to whole mining environment.

In another embodiment of the central processing center, the central processing unit generates the hazardous location information with respect to a three dimensional mesh of the mining environment. This provides for easy visualization of the hazardous location information.

In yet another embodiment of the central processing center, the central processing unit processes at least one of the real time information and the geological information and generates the three dimensional mesh on a basis of said processing. This provides a self-sufficient mechanism for generating the three dimensional mesh.

In one embodiment of the central processing center, the central processing unit further processes the real time information and the geological information, and generates an slope failure information regarding locations in the mining environment susceptible to slope failures. This helps to locate in slope failures in addition to the regions affected due to slope failures.

In another embodiment of the central processing center, the central processing center receives a current location of the mobile processing center in real time from the mobile processing center and stores the current location of the mobile processing center into a location storage. The current location can be retrieved from the current location whenever queried. This helps to locate the mobile processing center whenever the mobile communication center is lost within the mining environment.

The object is also fulfilled by a mobile processing center for a mining environment which couples with a central processing center for transferring and receiving data. The mobile processing center includes a receiver which receives hazardous location information from the central processing center, wherein the hazardous location information is defined by locations in the mining environment likely to be affected due to slope failures. The mobile processing center also includes a mobile processing unit which receives the hazardous location information from the receiver and compares the hazardous location information with respect to a current location of the mobile processing center for regulating movement of the mobile processing center within the mining environment. The current location of the mobile processing center refers to location of the mobile processing center within the mining environment at a particular time instance.

In one embodiment of the mobile processing center, the mobile processing unit receives the current location from a real time positioning system enabled to determine location of the mobile processing center at the particular time instance in real time. This helps to receive current location of the mobile processing center in real time.

In another embodiment of the mobile processing center, the receiver receives an slope failure information regarding location in the mining environment susceptible to slope failures, and the mobile processing center provides the slope failure information to a controller of the mining operation for controlling the mining operation with respect to a part of the mining environment referred by the slope failure information. This helps to reduce chances of slope failures and further strengthens virtual fencing of the mining environment.

In yet another embodiment of the mobile processing center, the mobile processing center provides the current location to the central processing center in real time for storing the current location into location storage of the central processing center and retrieving the current location from the location storage on querying. This helps to keep the central processing center up to date with current location of the mobile processing center and helps to locate the mobile processing center in case of any mishap.

The object is also fulfilled by a virtual fencing system including a central processing center and a mobile processing center for forming a data coupling to transfer data between the central processing center and the data processing center. The central processing center generates hazardous location information for location in the mining environment likely to be affected due to slope failures by processing real time information and a geological information of the mining environment. The mobile processing environment receives the hazardous location information and compares the hazardous location information with current information of the mobile processing center for regulating movement of the mobile processing center within the mining environment.

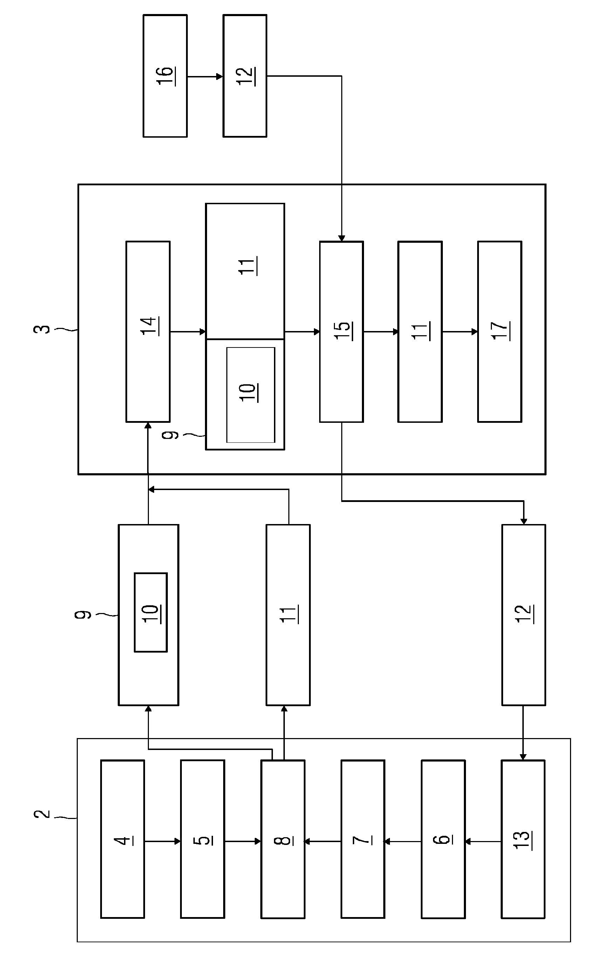

FIG 1 illustrates a schematic diagram of a virtual fencing system.

Hereinafter, various embodiments for carrying out the present invention are described in detail. The embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Prior to explaining functioning of system through various embodiments, some of the terminology used herein will be explained.

"Mining environment" refers to a geographical area where the mining operations like excavations are to be performed and includes surface, subsurface, weather, etc. of the geographical area.

"Central processing unit" and "Mobile processing unit" are generally logic circuitry that responds to and processes the basic instructions for performing a function. They may be a central processing unit of a personal computer adapted to perform the function or microprocessors which are multipurpose, programmable devices that accepts data as input, processes it according to instructions stored in its memory, and provides results as output or any other computing device adapted to perform functions of the central processing unit and/or the mobile processing unit according to current invention. However, technical difference between the central processing unit and the mobile processing unit are explained through there functionalities while explaining the figures.

"Data storage" and "Location storage" are electronic storing medium which stores computerized and/or electronic data. Some examples of storage are CD ROM, RAM, Hard Disk, USB device, electromagnetic storing medium, optical storing medium or any other storage medium capable of storing computerized and/or electronic data.

"Sensor" is a device which receives real time information from the mining environment. The sensor may be an operational information detector receiving operational information of the mining environment, an image capturing device capturing real time images of the mining environment, slope stability radar, a ground penetrating radar or acoustic probe generating subsurface profile or any such sensing device capturing real time information from the mining environment.

"Hazardous location information" is a computerized data defining location in a mining environment which is probable to be affected due to surface failures and helps to create virtual fence in the mining environment for regulating movement within mining environment. It may include coordinates in three/two dimensional coordinate systems, marked two dimensional/ three dimensional pictures, video streams, coordinate information, graphical representations, etc.

"Slope failure information" is a computerized data defining location in a mining environment which is susceptible to surface failures. This information helps to strengthen the virtual fencing system by providing locations on walls/slopes of mining environment which can create disturbances into nearby surfaces of the mining environment creating slope failure situations. This information may include coordinates in three/two dimensional coordinate systems, marked two dimensional/ three dimensional pictures, video streams, coordinate information, graphical representations, etc.

"Current Location" is a computerized data defining current location of a mobile processing center at a particular instance and can be represented by coordinates in three/two dimensional coordinate systems, marked two dimensional/ three dimensional pictures, video streams, coordinate information, graphical representations, etc.

"Three dimensional mesh" is a collection of vertices, edges and faces that together formulates finite elements and defines partition of a fraction of a volume of the mining environment. The faces usually consist of triangles, quadrilaterals or other simple convex polygons, since this simplifies rendering, but may also be composed of more general concave polygons, or polygons with holes.

"Real time information" is computerized data and is defined by data captured in real time like slope stability information, real time weather information captured/generated in real time, geometric information captured in real time, ground penetrating radar signal based information, etc.

"Geological information" is computerized data and is defined by data collected/generated in past like weather information, material profile of surface of mining environment, geochemical, geophysical information, earth crust details, seismic information etc. It can also include information related to risk of slope failure within the mining environment.

"Receiver" is a component of mobile processing center responsible for establishing and maintaining data coupling between the central processing center and the mobile processing center for receiving hazardous location information from the central processing center. Example of receiver is mobile communication antenna, radio-frequency antenna, etc.

FIG 1 shows a virtual fencing system 1 including a central processing center 2 and a mobile processing center 3 in a data coupling transferring data between each other.

The central processing center 2 includes a sensor 4, a data storage 6 and a central processing unit 8. The sensor 4 captures real time information 5 from the mining environment and provides the real time information 5 to the central processing unit 8. The data storage 6 stores geological information 7 related to the mining environment and provides the geological information 7 to the central processing unit 8 for further processing. The central processing unit 8 receives the real time information 5 from the sensor 4 and the geological information 7 of the mining environment from the data storage 6, processes the real time information 5 and the geological information 7, and generates a hazardous location information 9 regarding locations in the mining environment likely to be affected due to slope failures.

The central processing unit 8 generates the hazardous location information 9 by determining a location coordinate 10 on the global coordinate system. The global coordinate system defines the mining environment. In an alternate embodiment, the central processing unit 8 provides the hazardous location information 9 by marking on a two dimensional/three dimensional image. Yet alternatively, the central processing unit 8 generate the hazardous location information 9 with respect to a three dimensional mesh of the mining environment. Yet alternatively, the central processing unit 8 processes at least one of the real time information 5 and the geological information 7 and generates the three dimensional mesh on a basis of said processing.

The central processing unit 8 further processes the real time information 5 and the geological information 7, and generates an slope failure information 11 regarding locations in the mining environment susceptible to slope failures. In an alternate embodiment, the central processing unit 8 need not generate the slope failure information 11 and such information may be available with a mining operator from any other automated computer application.

The central processing center 2 receives a current location 12 of the mobile processing center 3 in real time, stores it in location storage 13 and retrieves the current location 12 whenever queried. The central processing center 2 can keep on storing the current location 12 of the mobile processing center 3 along with a time stamp representing location of mobile processing center 3 at a particular time instance. The central processing center 2 can also keep on updating current location 12 of the mobile processing center 3 by replacing previously stored current location 12 of the mobile processing center 3 with current location 12 of the mobile processing center 3 recently received from the mobile processing center 3. The central processing center 2 need not receive and store the current location 12 of the mobile processing center 3; rather current location 12 of the mobile processing center 3 can be stored in any other storage and can be retrieved without involving central processing center 2.

The mobile processing center 3 includes a receiver 14 for receiving the hazardous location information 9 from the central processing center 2 and a mobile processing unit 15 which receives the hazardous location information 9 from the receiver 14 and compares the hazardous location information 9 with respect to a current location 12 of the mobile processing center 3 for regulating movement of the mobile processing center 3 within the mining environment. The current location 12 of the mobile processing center 3 refers to location of the mobile processing center 3 within the mining environment at a particular time instance.

The mobile processing unit 15 receives the current location 12 from a real time positioning system 16 enabled to determine location of the mobile processing center 3 at an instance in real time. Examples of real time positioning system 16 are Global positioning system (GPS), Local positioning system, etc. In an alternate embodiment, the mobile processing unit 15 generates the current location 12 by receiving location of the mobile processing center 3 from storage on initiating mobile processing center 3 and further calculating current location 12 of the mobile processing center 3 as the mobile processing center 3 moves.

The receiver 14 receives a slope failure information 11 regarding locations in the mining environment susceptible to slope failures. The mobile processing center 3 provides the slope failure information 11 to a controller 17 of the mining operation for controlling the mining operation with respect to a part of the mining environment referred by the slope failure information 11. The controller 17 is attached to the mobile processing center 3 and controls an excavator attached to the mobile processing center 3 while excavating surface of the mining environment. In an alternate embodiment, where the controller 17 of the mobile processing center 3 is placed separately from the mobile processing center 3, the slope failure information 11 can be provided to the controller 17 directly for controlling the mining operations.

## Claims

1. A central processing center (2) for a virtual fencing system (1), the central processing center (2) adapted to be in a data coupling with a mobile processing center (3), the central processing center (2) comprises:
- a sensor (4) adapted to capture real time information (5) from the mining environment,
- a data storage (6) storing a geological information (7) related to the mining environment,
- a central processing unit (8) adapted to receive the real time information (5) from the sensor (4) and the geological information (7) of the mining environment from the data storage (6), and to process the real time information (5) and the geological information (7), and to generate a hazardous location information (9) regarding location in the mining environment likely to be affected due to slope failures, wherein the central processing center (2) adapted to provide the hazardous location information (9) to the mobile processing center (3).

2. The central processing center (2) according to claim 1, wherein the central processing unit (8) adapted to generate the hazardous location information (9) by determining a location coordinate (10) on a global coordinate system, wherein the global coordinate system defines the mining environment.

3. The central processing center (2) according to any of the claim 1 or 2, wherein the central processing unit (8) is adapted to generate the hazardous location information (9) with respect to a three dimensional mesh of the mining environment.

4. The central processing center (2) according to the claim 4, wherein the central processing unit (8) is adapted to process atleast one of the real time information (5) and the geological information (7) and to generate the three dimensional mesh on a basis of said processing.

5. The central processing center (2) according to any of the claims 1 to 4, wherein the central processing unit (8) is adapted to further process the real time information (5) and the geological information (7), and to generate an slope failure information (11) regarding locations in the mining environment susceptible to slope failures.

6. The central processing center (2) according to any of the claims 1 to 5, wherein the central processing center (2) is adapted to receive a current location (12) of the mobile processing center (3) in real time, the central processing center (2) further comprising:
- a location storage (13) adapted to store the current location (12) of the mobile processing center (3) and to retrieve the current location (12) whenever queried.

7. A mobile processing center (3) for a virtual fencing system (1), the mobile processing center (3) adapted to be in a data coupling with a central processing center (2), the mobile processing center (3) comprises:
- a receiver (14) adapted to receive a hazardous location information (9) from the central processing center (2), wherein the hazardous location information (9) is defined by location in the mining environment likely to be affected due to slope failures,
- a mobile processing unit (15) adapted to receive the hazardous location information (9) from the receiver (14) and to compare the hazardous location information (9) with respect to a current location (12) of the mobile processing center (3) for regulating movement of the mobile processing center (3) within the mining environment,
wherein the current location (12) of the mobile processing center (3) refers to location of the mobile processing center (3) within the mining environment at a particular time instance.

8. The mobile processing center (3) according to the claim 7, wherein the mobile processing unit (15) is adapted to receive the current location (12) from a real time positioning system (16) enabled to determine location of the mobile processing center (3) at the particular time instance in real time.

9. The mobile processing center (3) according to any of the claims 7 or 8, wherein the receiver (14) is adapted to receive a slope failure information (11) regarding locations in the mining environment susceptible to slope failures, and the mobile processing center (3) is adapted to provide the slope failure information (11) to a controller (17) of a mining operation for controlling the mining operation with respect to a part of the mining environment referred by the slope failure information (11).

10. The mobile processing center (3) according to any of the claims 7 to 9, wherein the mobile processing center (3) is adapted to provide the current location (12) to the central processing center (2) in real time for storing the current location (12) into a location storage (13) of the central processing center (2) and retrieving the current location (12) from the location storage (13) on querying.

11. A virtual fencing system (1) for a mining environment comprising:
- a central processing center (2) a sensor (4) adapted to capture real time information (5) from the mining environment, a data storage (6) storing a geological information (7) related to the mining environment, a central processing unit (8) adapted to receive the real time information (5) from the sensor (4) and the geological information (7) of the mining environment from the data storage (6), and to process the real time information (5) and the geological information (7), and to generate a hazardous location information (9) regarding locations in the mining environment likely to be affected due to slope failures, and
- a mobile processing center (3) comprising a receiver (14) adapted to receive a hazardous location information (9) from the central processing center (2), wherein the hazardous location information (9) is defined by locations in the mining environment likely to be affected due to slope failures, a mobile processing unit (15) adapted to receive the hazardous location information (9) from the receiver (14) and to compare the hazardous location information (9) with respect to a current location (12) of the mobile processing center (3) for regulating movement of the mobile processing center (3) within the mining environment, wherein the current location (12) of the mobile processing center (3) refers to location of the mobile processing center (3) within the mining environment at a particular time instance.

12. The system (1) according to claim 11 comprising the central processing center (2) according to any of the claims 1 to 6.

13. The system (1) according to claim 11 comprising the mobile processing center (3) according to any of the claims 7 to 10.

14. The system (1) according to claim 11 comprising the central processing center (2) according to any of the claims 1 to 6 and the mobile processing center (3) according to any of the claims 7 to 10.
